(19) Europäisches Patentamt / European Patent Office / Office européen des brevets

(11) **EP 4 660 024 A1**

(12) **EUROPEAN PATENT APPLICATION**

(43) Date of publication:
**10.12.2025 Bulletin 2025/50**

(21) Application number: **24210496.6**

(22) Date of filing: **04.11.2024**

(51) International Patent Classification (IPC):
**B60T 7/12** $^{(2006.01)}$ **B60T 8/1755** $^{(2006.01)}$
**B60T 8/32** $^{(2006.01)}$ **B60W 30/02** $^{(2012.01)}$
**B60W 50/029** $^{(2012.01)}$ **B62D 6/00** $^{(2006.01)}$
**B62D 7/15** $^{(2006.01)}$ **B62D 9/00** $^{(2006.01)}$

(52) Cooperative Patent Classification (CPC):
**B60T 8/3255; B60T 7/12; B60T 8/1755;
B60W 10/20; B60W 30/02; B60W 50/029;
B62D 6/003; B62D 7/159; B62D 9/002;
B62D 9/005;** B60T 2260/02; B60T 2260/022;
B60T 2270/302; B60T 2270/303; B60T 2270/613;

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2024 KR 20240074363**

(71) Applicant: **Hyundai Mobis Co., Ltd.
Gangnam-gu
Seoul 06141 (KR)**

(72) Inventor: **LEE, Jong Min
16891 Yongin-si (KR)**

(74) Representative: **Vossius & Partner
Patentanwälte Rechtsanwälte mbB
Siebertstrasse 3
81675 München (DE)**

(54) **CONTROL APPARATUS OF FOUR-WHEEL INDEPENDENT CONTROL VEHICLE AND METHOD THEREOF**

(57)     Provided are a control apparatus of a four-wheel independent control vehicle (10) and a method thereof. The control apparatus of a four-wheel independent control vehicle includes a plurality of wheels (21-24) each installed with a steering device (150), a driving device (160), and a braking device (170), and a processor (110) configured to, when a failure occurs in any one steering device of the plurality of wheels, determine a location of a failed wheel, calculate an insufficient cornering force of the failed wheel, and compensate for the insufficient cornering force by controlling at least one of the steering device, the driving device, and the braking device installed on each of the plurality of wheels. Even though a failure occurs in the steering device of any one wheel, traveling performance can be maintained by compensating for an insufficient cornering force.

FIG. 1

**(Cont. next page)**

EP 4 660 024 A1

(52) Cooperative Patent Classification (CPC): (Cont.)
    B60T 2270/82

# Description

## CROSS-REFERENCE TO RELATED APPLICATION

This application claims priority from and the benefit of Korean Patent Application No. 10-2024-0074363, filed on June 7, 2024.

## BACKGROUND

### FIELD

Exemplary embodiments of the present disclosure relate to a control apparatus of a four-wheel independent control vehicle that controls a plurality of wheels that independently operate and a method thereof.

### DISCUSSION OF THE BACKGROUND

Recently, there is a trend toward developing vehicles in which all four wheels can be independently driven and braked and can be independently steered.

A vehicle in which all four wheels independently operate is provided on each wheel with a driving device (motor), a steering device, and a brake for driving one wheel, so that the vehicle can be driven and the direction of the vehicle can be independently controlled.

However, in the case of a vehicle that can be independently driven and steered, although each wheel can be independently controlled, when a failure occurs in any one wheel, problems may occur in controlling the driving direction of the vehicle. Accordingly, a method for controlling steering when a failure occurs in any one wheel is necessary.

The background art for a vehicle that can be independently driven and steered is disclosed in Korean Patent Application Laid-Open No. 10-2009-0062321 (entitled "Control Technology for Independent in Wheel Drive System for future Vehicles").

## SUMMARY

The present disclosure has been made to solve the above problems, and an object according to one aspect of the present disclosure is to provide a control apparatus of a four-wheel independent control vehicle that maintains driving performance even though a failure occurs in any one steering device of a vehicle in which four wheels can be independently controlled and a method thereof.

In order to solve the above problems, a control apparatus of a four-wheel independent control vehicle in accordance with an aspect of the present disclosure includes: a plurality of wheels each installed with a steering device, a driving device, and a braking device; and a processor configured to, when a failure occurs in any one steering device of the plurality of wheels, determine a location of a failed wheel, calculate an insufficient cornering force of the failed wheel, and compensate for the insufficient cornering force by controlling at least one of the steering device, the driving device, and the braking device installed on each of the plurality of wheels.

The processor compensates for the insufficient cornering force by additionally steering the steering device of a normal wheel.

The processor controls the driving device to increase a driving force of a normal wheel installed in a different direction from a direction of the failed wheel, thereby compensating for the insufficient cornering force.

The processor controls the driving device to reduce a driving force of the failed wheel or to reduce a driving force of a normal wheel located in the same direction as a direction of the failed wheel, thereby compensating for the insufficient cornering force.

The processor controls the braking device to increase a braking force of the failed wheel or to increase a braking force of a normal wheel located in the same direction as a direction of the failed wheel, thereby compensating for the insufficient cornering force.

When a speed of the vehicle is greater than a threshold value, the processor controls the driving device to reduce a driving force or controls the braking device to increase a braking force, thereby compensating for the insufficient cornering force, and when the speed of the vehicle is less than or equal to the threshold value, the processor controls the steering device to additionally steer a normal wheel or controls the driving device to increase a driving force, thereby compensating for the insufficient cornering force.

A control method of a four-wheel independent control vehicle in accordance with an aspect of the present disclosure includes: determining, by a processor, a failure in a steering device, a driving device, and a braking device installed on each of a plurality of wheels; determining, by the processor, a location of a failed wheel, calculate an insufficient cornering force of the failed wheel when a failure occurs in any one steering device of the plurality of wheels; and compensating for, by the processor, the insufficient cornering force by controlling at least one of the steering device, the driving device, and the braking device installed on each of the plurality of wheels.

In the compensating, when a speed of the vehicle is greater than a threshold value, the processor controls the driving device to reduce a driving force or controls the braking device to increase a braking force, and when the speed of the vehicle is less than or equal to the threshold value, the processor controls the steering device to additionally steer a normal wheel or controls the driving device to increase a driving force.

In the compensating, the processor performs at least one operation of an operation of controlling the steering device to additionally steer a normal wheel and an operation of controlling the driving device to increase a driving force of the normal wheel installed in a different direction from a direction of the failed wheel.

In the compensating, the processor performs at least one operation of an operation of controlling the driving device to reduce a driving force of the failed wheel, an operation of controlling the driving device to reduce a driving force of a normal wheel located in the same direction as a direction of the failed wheel, an operation of controlling the braking device to increase a braking force of the failed wheel, and an operation of controlling the braking device to increase a braking force of the normal wheel located in the same direction as the direction of the failed wheel.

In accordance with an aspect, a control apparatus of a four-wheel independent control vehicle and a method thereof of the present disclosure can maintain driving performance by compensating for cornering force when a failure occurs in any one of a plurality of wheels that can be independently controlled.

A control apparatus of a four-wheel independent control vehicle and a method thereof of the present disclosure in accordance with an aspect of the present disclosure can control the vehicle to safely move through compensation control, thereby improving the safety and reliability of the vehicle.

A control apparatus of a four-wheel independent control vehicle and a method thereof of the present disclosure in accordance with an aspect of the present disclosure can improve the function and performance of the vehicle.

**BRIEF DESCRIPTION OF THE DRAWINGS**

FIG. 1 is a diagram schematically illustrating the configuration of a four-wheel independent control vehicle in accordance with an embodiment of the present disclosure.

FIG. 2 is a block diagram schematically illustrating the configuration of a control apparatus in accordance with an embodiment of the present disclosure.

FIG. 3 is a diagram schematically illustrating a control logic of the control apparatus in accordance with an embodiment of the present disclosure.

FIG. 4 is a diagram schematically illustrating a control configuration for controlling an operation of the four-wheel independent control vehicle in accordance with an embodiment of the present disclosure.

FIG. 5 is a diagram for reference in describing a fail-safe operation logic of the control apparatus in accordance with an embodiment of the present disclosure.

FIG. 6 is a flowchart illustrating a control method of the four-wheel independent control vehicle in accordance with an embodiment of the present disclosure.

FIG. 7 is an exemplary diagram for reference in describing compensation control of the control apparatus in accordance with an embodiment of the present disclosure for a failure in a steering device.

FIGS. 8A to 8C are exemplary diagrams for reference in describing a cornering force compensation method of the control apparatus in accordance with an embodiment of the present disclosure.

**DETAILED DESCRIPTION OF THE ILLUSTRATED EMBODIMENTS**

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium. The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, embodiments that include other components in addition to the components described in the various embodiments are also included in the scope of the present disclosure.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, exemplary embodiments that include other components in addition to the components described in the various embodiments are also included in the scope of the present disclosure.

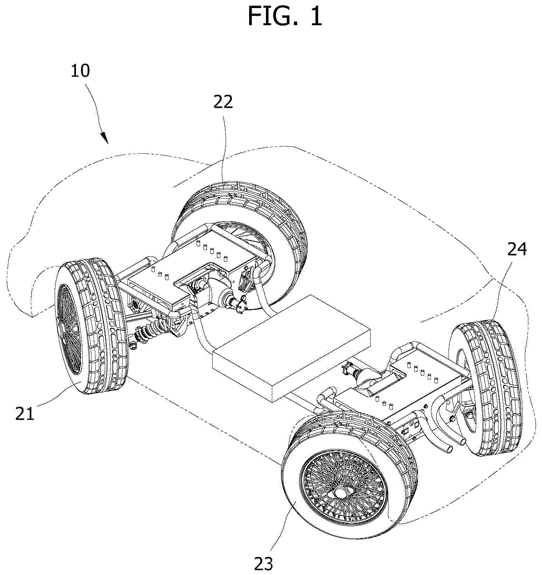

FIG. 1 is a diagram schematically illustrating the configuration of a four-wheel independent control vehicle in accordance with an embodiment of the present disclosure.

As illustrated in FIG. 1, a plurality of wheels 21 to 24 provided in a vehicle 10 may operate independently.

The plurality of wheels 21 to 24 each include a driving device (in-wheel motor) for driving, a steering device for direction control, and a braking device (brake), so that they may be independently driven and braked and the directions thereof may be controlled.

The vehicle 10 may independently control the steering angles of front and rear wheels in the same phase or in a contra phase in response to the intention of a driver by independently controlling the plurality of wheels 21 to 24. The vehicle 10 may also be travelled in various motions such as crab driving, zero turn, diagonal driving, and pivot turn.

The plurality of wheels 21 to 24 may include at least 12 actuators for independent driving, steering, and braking.

When a failure occurs in any one actuator and the plurality of wheels 21 to 24 do not operate normally, a control apparatus may control the vehicle 10 to safely move through fail-safe control. The control apparatus may control any one of the driving, steering, and braking of the plurality of wheels 21 to 24 to compensate for insufficient driving performance caused by a wheel in which the failure has occurred.

For example, when a failure occurs in a steering device of any one wheel, the control apparatus may control the steering and driving of other wheels, and control the driving or braking of the failed wheel in which the failure has occurred, thereby compensating for an insufficient cornering force caused by the failure in the steering device.

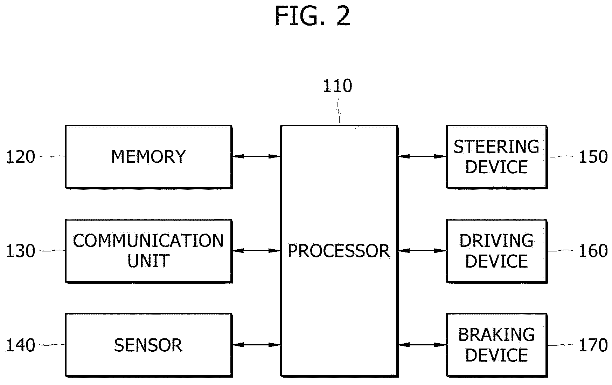

FIG. 2 is a block diagram schematically illustrating the configuration of the control apparatus in accordance with an embodiment of the present disclosure.

As illustrated in FIG. 2, the control apparatus of the vehicle in accordance with the present disclosure may include a memory 120, a communication unit 130, a sensor 140, a steering device 150, a driving device 160, a braking device 170, and a processor 110.

The memory 120 may store data for controlling travelling, driving, braking, and steering of the vehicle 10, data measured from the sensor 140, and data on the plurality of wheels.

The memory 120 may store data on at least one of a steering control algorithm, a driving control algorithm, a braking control algorithm, a traveling control algorithm, and a fail-safe control algorithm.

For example, the memory 120 may include a nonvolatile memory such as a random access memory (RAM), a ROM, an electrically erasable programmable ROM (EEPROM), storage means such as a flash memory, and the like.

The communication unit 130 performs communication within the vehicle 10 and communication with the outside. For example, the communication unit may transmit/receive data within the vehicle by using CAN communication or LIN communication, and may transmit/receive data to/from the outside by using vehicle-to-vehicle communication (V2X), Ethernet, Wi-Fi, Bluetooth, and the like.

The sensor 140 may include at least one of a voltage sensor, a current sensor, a pressure sensor, a wheel speed sensor, a steering angle sensor, a vehicle speed sensor, a pedal stroke sensor, and a torque sensor. For example, the vehicle speed sensor may detect the traveling speed of the vehicle 10, and the torque sensor may be provided on each of the plurality of wheels 21 to 24 to measure a braking force applied thereto. The wheel speed sensor may be provided on each of the plurality of wheels 21 to 24 to measure the rotational speed thereof.

The steering device 150, the driving device 160, and the braking device 170 may be provided on each of the plurality of wheels 21 to 24. In such a case, the steering device 150, the driving device 160, and the braking device 170 may be configured as in-wheel modules and may be installed on the plurality of wheels.

The steering device 150 may control the traveling direction by controlling the angle of at least one of the plurality of wheels 21 to 24.

The driving device 160 may include in-wheel motors provided on the plurality of wheels 21 to 24. The driving device 160 drives the in-wheel motors according to a control signal applied from the processor 110 to allow the vehicle 10 to travel. The driving device 160 mal also control the in-wheel motor to generate a reverse torque, thereby braking the vehicle 10.

The braking device 170 may include an electro mechanical brake (EMB). The EMB may be provided on each of the plurality of wheels 21 to 24 to independently brake the four wheels. The EMB may control the attitude of the vehicle by controlling ABS, TCS, BAS, and electronic stability program (ESP) functions in an integrated manner.

The braking device 170 performs braking by applying braking torque to the wheels according to a braking force calculated by converting a force applied to a brake pedal into an electric signal. The braking device 170 may transmit a braking force to the plurality of wheels 21 to 24 based on signal input according to the operation of a button or a switch. In addition, the braking device 170 operates the EMB on the basis of a sensor signal input in response to the operation (pressing) of the brake pedal (not illustrated) to reduce the speed or stop the vehicle.

The processor 110 may include at least one microprocessor and may operate based on data stored in the memory 120.

The processor 110 may determine the traveling state of the vehicle based on sensor data input from the sensor 140. The processor 110 may control the steering device 150 in response to a steering angle to adjust a wheel angle, and may control the steering device 150 according to motion setting. For example, the processor 110 may control the steering device 150 and the driving device 160 according to the motion setting to control the vehicle 10 to travel in motions such as crab driving, zero turn, diagonal driving, and pivot turn.

In addition, the processor 110 may calculate a required braking force according to the degree of operation of the brake pedal 190, and perform braking by controlling the in-wheel motor of the driving device 160 and the EMB of the braking device 170.

The processor 110 may detect a failure in at least one of the plurality of wheels 21 to 24.

For example, when a cornering force by the steering device 150 is less than a required cornering force, the processor 110 may determine that a failure has occurred in the steering device 150. The processor 110 may control the steering device 150 based on a steering angle according to the operation of the steering wheel, and when the output of the steering device 150 does not follow input at the time when the turning starts, the processor 110 may determine that a failure has occurred in the steering device 150.

When a failure is detected in any one of the steering devices 150 provided on the plurality of wheels 21 to 24, the processor 110 may compensate for an insufficient cornering force due to the failure through fail-safe control. The processor 110 may compensate for the insufficient cornering force due to the failure by controlling the steering, driving, and braking of the plurality of wheels 21 to 24, thereby controlling the vehicle 10 to maintain its traveling performance.

In addition, the processor 110 may output a warning about the failure through a display (not illustrated) with respect to the steering device 150 in which the failure is detected.

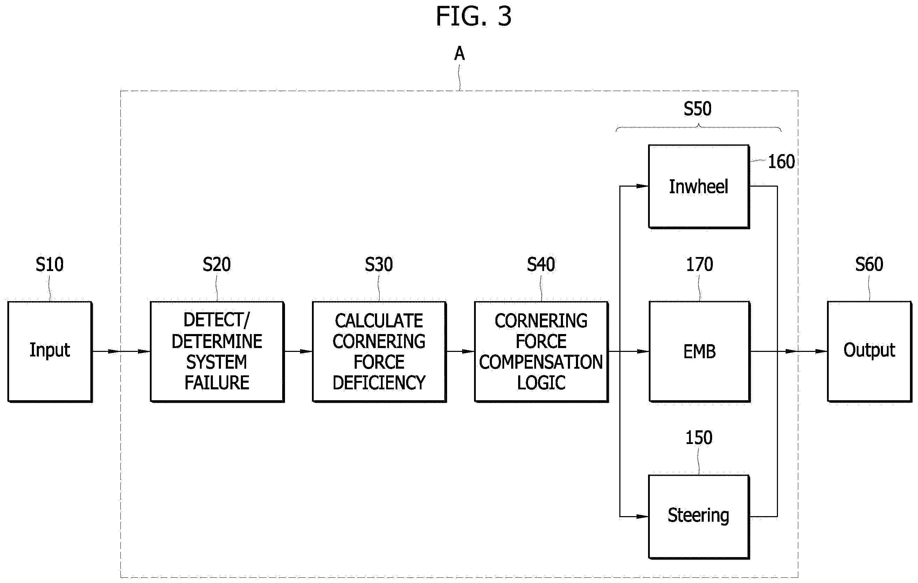

FIG. 3 is a diagram schematically illustrating a control logic of the control apparatus in accordance with an embodiment of the present disclosure.

As illustrated in FIG. 3, the control apparatus may control at least one of the steering, driving, and braking of the plurality of wheels 21 to 24 in response to input (S10). In such a case, the processor 110 generates a control signal in response to the pedal input of an accelerator pedal sensor (APS) or a brake pedal sensor (BPS), the operation of the steering wheel, and input through at least one of buttons, switches, and touch pads.

The processor 110 may detect whether each of the steering device 150, the driving device 160, and the braking device 170 provided on each of the plurality of wheels 21 to 24 is in a non-operational state, and determine a failure according to the detection result (S20).

When a failure in the steering device 150 is detected, the processor 110 calculates cornering force deficiency of the steering device 150 of the plurality of wheels 21 to 24 based on a steering angle according to the operation of the steering wheel (S30).

The processor 110 sets a compensation logic for compensating for the cornering force (S50). In such a case, depending on the vehicle speed, the processor 110 may set the compensation logic in the direction of increasing safety when the vehicle speed is high, and in the direction of increasing the cornering force when the vehicle speed is low.

The processor 110 performs fail-safe control for at least one of the steering device 150, the driving device 160, and the braking device 170 based on the set compensation logic. The processor 110 outputs a control signal for at least one of the in-wheel motor torque, the braking force, and the steering angle to the plurality of wheels 21 to 24 (S60). For example, the processor 110 may control the steering angle of a steering device of a second wheel 22, which is a normal wheel, in response to a failure in the steering device 150 of a first wheel 21, or control the driving force of the second wheel 22, and may also control the driving force or braking force of the first wheel 21 that is a failed wheel.

Accordingly, at least one of the steering device 150, the driving device 160, and the braking device 170 may operate based on the output control signal to compensate for the insufficient cornering force.

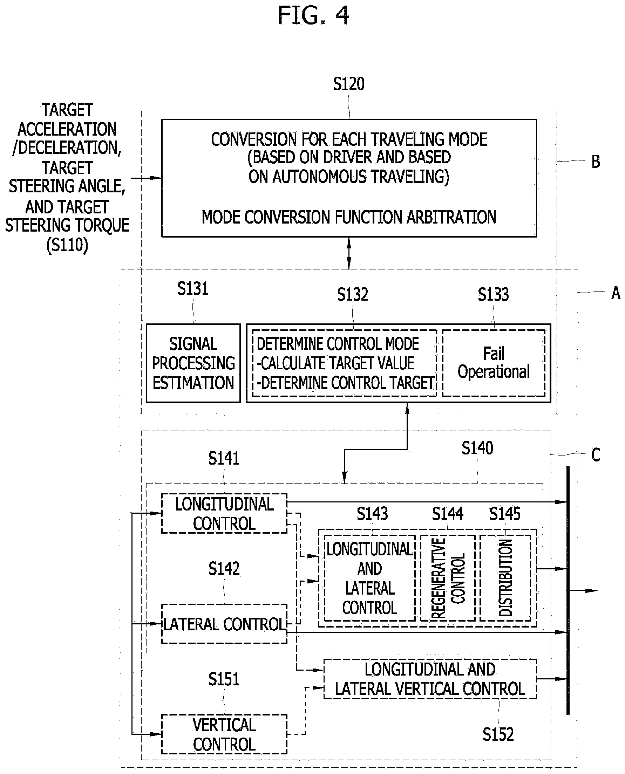

FIG. 4 is a diagram schematically illustrating a control configuration for controlling an operation of the four-wheel independent control vehicle in accordance with an embodiment of the present disclosure.

As illustrated in FIG. 4, the control apparatus controls the plurality of wheels 21 to 24 based on the input (S110) including a target acceleration according to acceleration or deceleration, a target steering angle, and a target steering torque.

The processor 110 may process data for controlling the in-wheel module provided on the plurality of wheels 21 to 24 (A), process control and signal distribution for signal processing of the processor (B), and control the in-wheel module (C).

The control apparatus may convert a mode for controlling the in-wheel module (S120) in response to a driver traveling mode or an autonomous traveling mode of the vehicle 10.

When the vehicle is in the driver traveling mode, the processor 110 may control at least one of the steering device 150, the driving device 160, and the braking device 170 in response to the operation of the steering wheel, the input of the pedal, or the like. In addition, when the vehicle is in the autonomous traveling mode, the processor 110 can control at least one of the steering device 150, the driving device 160, and the braking device 170 based on autonomous driving setting according to a traveling path or locations of surrounding obstacles.

The processor 110 may process a signal input from the sensor 140 or the communication unit 130, and determine or estimate the state of the vehicle (S131). The processor 110 determines a control mode based on input data (S132). The processor 110 may designate a control target according to a control mode, calculate a target value, and control the control target.

The processor 110 may also detect a failure in the vehicle. When the failure is detected, the processor 110 may control the vehicle so that the traveling function of the vehicle is maintained (S133). The processor 110 may maintain the control state of the vehicle within a limited function by switching the state of the vehicle to a safe state based on a fail-safe system. In addition, the processor 110 may maintain the function so that the vehicle normally operates even though a failure occurs through a fail operational system.

The processor 110 may control the operations of the steering device 150, the driving device 160, and the braking device 170 in response to the set control mode, and monitor the state thereof. At least one of the steering device 150, the driving device 160, and the braking device 170 provided on each of the plurality of wheels 21 to 24 may operate according to the control signal of the processor 110.

The processor 110 may perform at least one of longitudinal control (S141), lateral control (S142), and vertical control (S151). For example, the longitudinal control (S141) may include forward control, backward control, and speed control. The lateral control (S142) may include at least one of left turning control, right turning control, crab driving, diagonal driving, and rotation control. The vertical control (S151) and the longitudinal and lateral vertical control (S152) may include control for the up and down movement of the vehicle 10. For example, the vehicle 10 may control an axle to rise or fall through the vertical control (S151) and the longitudinal and lateral vertical control (S152).

In addition, the processor 110 may perform longitudinal and lateral control (S143) that simultaneously performs the longitudinal control (S141) and the lateral control (S142), and control regenerative braking (S144) and distribution (S145) operations.

Accordingly, the steering device 150 may control a wheel angle in the longitudinal or lateral direction, and the driving device 160 may increase a driving force or perform regenerative braking. The braking device 170 operates to decelerate or stop the vehicle 10 through a braking force (S145).

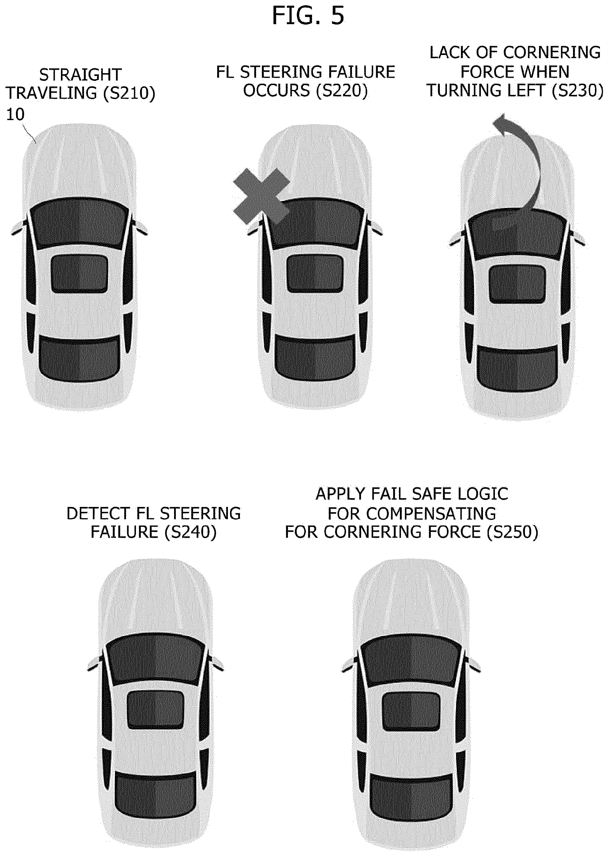

FIG. 5 is a diagram for reference in describing a fail-safe operation logic of the control apparatus in accordance with an embodiment of the present disclosure.

As illustrated in FIG. 5, while the vehicle 10 is traveling straight (S210), a failure may occur in a left front wheel 21 (S220).

When the steering wheel is operated during straight traveling, the processor 110 may control the left front wheel 21 and a right front wheel 22 among the plurality of wheels 21 to 24 so that the vehicle turns left in response to the steering direction. In such a case, the processor 110 may detect a lack of cornering force based on the difference between the steering angle according to the operation of the steering wheel and a path along which the vehicle actually turns left (S230).

The processor 110 may detect a failure location in response to the states of the left front wheel 21 and the right front wheel 22 (S240). In such a case, the left front wheel 21 is in a failure state, and the angle of the wheel is not changed by the steering control and is positioned in the forward direction (0°). Accordingly, the processor 110 may detect a failure in the steering device 150 of the left front wheel 21 based on the angle of the left front wheel 21.

The processor 110 calculates the insufficient cornering force due to the failure in the left front wheel 21. The processor 110 may perform fail-safe control for compensating for the insufficient cornering force (S250).

The processor 110 may compensate for the insufficient cornering force by applying a fail-safe compensation logic to the steering device 150. For example, the processor 110 may additionally control the right front wheel 22 to toe in through the steering device 150, or control a left rear wheel 23 to toe in. The processor 110 may also control the right rear wheel 24 to toe out.

The processor 110 may compensate for the insufficient cornering force by setting the fail-safe compensation logic to the driving device 160. For example, the processor 110 may reduce the driving force of the left front wheel 21 or increase the driving force of the right front wheel 22 through the driving device 160. In addition, the processor 110 may reduce the driving force of the left rear wheel 23 or increase the driving force of the right rear wheel 24 through the driving device 160.

The processor 110 may compensate for the insufficient cornering force by setting the fail-safe compensation logic in the braking device 170. For example, the processor 110 may control the electronic brake of the left front wheel 21 to increase the braking force. In addition, the processor 110 may control the electronic brake of the left rear wheel 23 to increase the braking force.

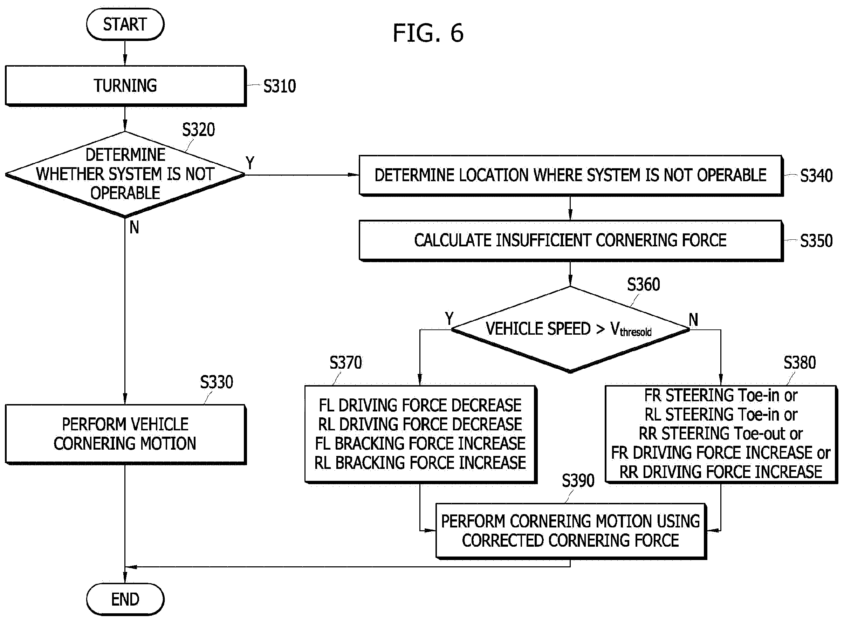

FIG. 6 is a flowchart illustrating a control method of the four-wheel independent control vehicle in accordance with an embodiment of the present disclosure.

As illustrated in FIG. 6, the control apparatus may control the traveling direction of the vehicle by controlling the plurality of wheels 21 to 24 in response to the steering direction of the steering wheel.

When the steering wheel is operated during straight traveling, the processor 110 may control the vehicle to turn left or right by applying a control signal to the steering device 150 according to a steering angle (S310).

The processor 110 may determine whether a system is not operable for the steering device 150 installed on each of the plurality of wheels 21 to 24 (S320). The processor 110 may determine whether the system is not operable for not only the steering device 150, but also the driving device 160 and the braking device 170.

The processor 110 controls the vehicle 10 to perform a cornering motion in response to input when the steering device 150, driving device 160, and braking device 170 of each of the plurality of wheels 21 to 24 are normal (S330).

On the other hand, the processor 110 may detect a failure in the steering device 150 based on the steering angle and the actual traveling direction (or traveling path) of the vehicle. The processor 110 determines the location where the failure has occurred among the plurality of wheels 21 to 24 (S340). The processor 110 may detect a failure based on the current state of the plurality of wheels 21 to 24. For example, in a case in which the vehicle turns left, when the left front wheel 21 is in a straight direction (0°), the processor 110 may determine that the failure has occurred in the steering device 150 of the left front wheel 21.

The processor 110 calculates the insufficient cornering force (cornering force deficiency) due to the steering device 150 of the failed wheel (S350).

The processor 110 may compare the speed of the vehicle 10 detected through the sensor 140 with a threshold value (S360), and set a fail-safe compensation logic according to the failure in the steering device 150 in response to the speed of the vehicle. When the vehicle speed is greater than a preset threshold value, the processor 110 may apply a compensation logic for increasing safety by determining that the vehicle speed is high, and when the vehicle speed is less than or equal to the threshold value, the processor 110 may apply a compensation logic for increasing a cornering force by determining that the vehicle speed is low.

When the vehicle speed is greater than the threshold value, the processor 110 may control the driving device 160 to decrease a driving force or control the braking device 170 to increase a braking force in order to increase safety (S370). For example, the processor 110 may control the driving device 160 to reduce the driving force of the left front wheel 21 being a failed wheel, or reduce the driving force of the left rear wheel 23 located in the same direction as that of the failed wheel. In addition, the processor 110 may control the braking device 170 to increase the braking force of the left front wheel 21 being a failed wheel, or increase the braking force of the left rear wheel 23 located in the same direction as that of the failed wheel.

Accordingly, the vehicle 10 may perform a cornering motion in the left direction by reducing the driving force of the wheel located in the same direction as that of the failed wheel or increasing the braking force (S390).

When the vehicle speed is less than or equal to the threshold value, the processor 110 may control the steering device 150 to increase the cornering force or control the driving device 160 to increase the driving force (S380). For example, the processor 110 may control the right front wheel 22 or the left rear wheel 23 to toe in through the steering device 150, or control the right rear wheel 24 to toe out. In addition, the processor 110 may increase the driving force of the right front wheel 22 located in a different direction from that of the left front wheel 21 being a failed wheel, or increase the driving force of the right rear wheel 24, through the driving device 160.

Accordingly, the vehicle 10 adjusts the angle of a normal wheel and increases the driving force of a wheel located in a different direction from that of a failed wheel, thereby increasing a cornering force in the left direction and performing a cornering motion in the left direction (S390).

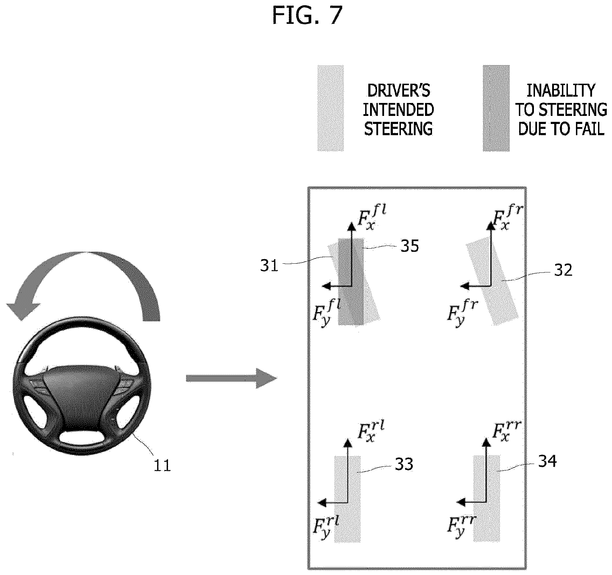

FIG. 7 is an exemplary diagram for reference in describing compensation control of the control apparatus in accordance with an embodiment of the present disclosure for a failure in the steering device.

As illustrated in FIG. 7, in a state in which the vehicle 10 is traveling straight, when the steering wheel 11 turns left, the control apparatus may control the vehicle to turn left by adjusting the angle of the front wheels among a plurality of wheels 31 to 34.

In order for the vehicle 10 to turn left, angles of front wheels 31 and 32 are changed to the left, and rear wheels 33 and 34 maintain the straight direction thereof.

During normal steering, a force acting on the left front wheel 31, that is, a cornering force $F^{fl}$, may be calculated based on a force $Fx^{fl}$ in a straight direction and a force Fy$^{fl}$ in a lateral direction. A force F$^{fr}$ applied to the right front wheel 32 may be calculated by adding the force Fx$^{fl}$ in the straight direction and the force Fy$^{fl}$ in the lateral direction.

When a failure occurs in the left front wheel 31, the left front wheel 31 may maintain the straight direction without changing the angle to the left. Accordingly, during the failure, since only the force Fx (fail$^{fl}$) in the straight direction is applied to the left front wheel 31 and the force Fy (fail$^{fl}$) in the lateral direction is 0, no cornering force is not generated. In this way, the cornering force may be affected by the force in the lateral direction.

Accordingly, the processor 110 may calculate an insufficient cornering force due to the failure as expressed by the following Equation 1.

## Equation 1

$$F^{fl} = F_x^{fl} + F_y^{fl}$$

$$F^{fl} = F_{x,fail}^{fl} \quad , \quad F_{y,fail}^{fl} = 0$$

$$F_y^{fl} = C_a \alpha$$

In Equation 1 above, Ca is cornering stiffness and a is a slip angle of a failed wheel.

The processor 110 may calculate the insufficient cornering force by multiplying the slip angle of a failed wheel, for example, the left front wheel 21, by the cornering stiffness.

The processor 110 may compensate for the cornering force by controlling at least one of the steering device 150, the driving device 160, and the braking device 170 based on the calculated cornering force.

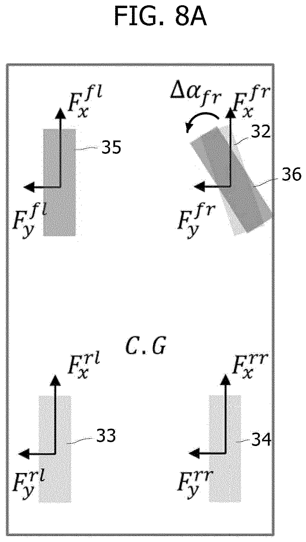

FIGS. 8A to 8C are exemplary diagrams for reference in describing a cornering force compensation method of the control vehicle in accordance with an embodiment of the present disclosure.

As illustrated in FIG. 8A, the control apparatus may compensate for a cornering force by controlling the normally operating steering device 150.

The processor 110 may calculate the insufficient cornering force as expressed by Equation 1 above, and then control the normally operating steering device 150 to additionally operate by the insufficient cornering force.

For example, when a failure occurs in the left front wheel 31, the processor 110 may additionally steer the right front wheel 32 to increase the cornering force of a right front wheel 36 by the insufficient cornering force.

Since a lateral force Fy required for cornering is $C_\alpha \alpha$, the cornering force can be compensated as expressed by the following Equation 2.

## Equation 2

$$C_a^{fl} a_{fl} = C_a^{fr} \triangle a_{fr}$$

$$\triangle a_{fr} = \frac{C_a^{fl}}{C_a^{fr}} a_{fl}$$

The processor 110 compensates for the cornering force $C_\alpha^{fr} \triangle \alpha_{fr}$ by additionally steering the right front wheel 32 with respect to cornering force deficiency $C_\alpha^{fl} \alpha_{fl}$ of the left front wheel 31. In Equation 2 above, $C_\alpha^{fl}$ is the cornering stiffness of the left front wheel 31, $C_\alpha^{fr}$ is the cornering stiffness of the right front wheel 32, and $C_\alpha$ is the cornering stiffness. Also, $\alpha_{fl}$ is the slip angle of the left front wheel 31, $\alpha_{fr}$ is the slip angle of the right front wheel 32, and $\alpha$ is the slip angle.

The processor 110 may also change an angle by controlling the steering device 150 of the left rear wheel 33 or the right rear wheel 34, thereby compensating for the cornering force.

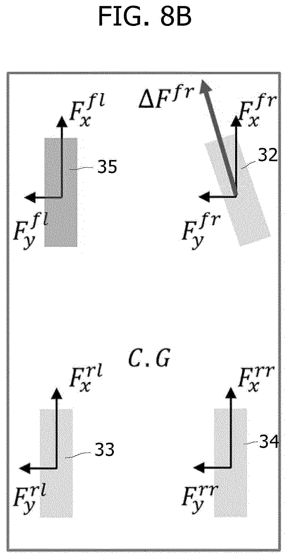

As illustrated in FIG. 8B, the processor 110 may calculate the insufficient cornering force and then control the driving device 160 of the right front wheel 32, thereby compensating for the cornering force.

For example, when a failure occurs in the left front wheel 31, the processor 110 may increase a driving force through the driving device 160 of the right front wheel 32, thereby increasing the cornering force of the right front wheel 36 by the amount of the insufficient cornering force.

The processor 110 may compensate for the cornering force through the driving force as expressed by the following Equation 3.

## Equation 3

$$C_a^{fl} a_{fl} = \triangle F^{fr} \sin \delta_{fr}$$

$$\triangle F^{fr} = \frac{C_a^{fl} a_{fl}}{\sin \delta_{fr}}$$

The processor 110 compensates for the cornering force by increasing the driving force of the right front wheel 32 with respect to the cornering force deficiency

$$C_\alpha^{fl}\alpha_{fl}$$

of the left front wheel 31. In Equation 3 above, $C_\alpha^{fl}\alpha_{fl}$ is the cornering stiffness of the left front wheel 31, $\alpha_{fl}$ is the slip angle of the left front wheel 31, and $\delta_{fr}$ is the steering angle of the right front wheel 32.

The processor 110 may also compensate for the cornering force by increasing the driving force of the right rear wheel 34 or decreasing the driving force of the left front wheel 31 or the left rear wheel 33.

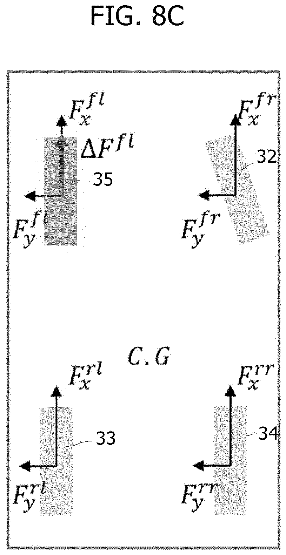

As illustrated in FIG. 8C, the processor 110 calculates the insufficient cornering force and then controls the braking device 170 of a left front wheel 35, thereby compensating for the cornering force.

For example, when a failure occurs in the left front wheel 31, the processor 110 may compensate for the insufficient cornering force by increasing the braking force through the braking device 170 of the left front wheel 35.

The processor 110 may compensate for the cornering force through the driving force as expressed by the following Equation 4.

Equation 4

$$\triangle F_{fl}\frac{w_f}{2} = C_\alpha^{fl}a_{fl}l_f$$

$$\triangle F_{fl} = \frac{2C_\alpha^{fl}a_{fl}l_f}{w_f}$$

The processor 110 compensates for a cornering moment $\triangle F^{fl}\frac{w_f}{2}$ by increasing the braking force of the left front wheel 35 with respect to the cornering force deficiency $C_\alpha^{fl}\alpha_{fl}$ of the left front wheel 35. In Equation 3 above, $C_\alpha^{fl}$ is the cornering stiffness of the left front wheel 35, $\alpha_{fl}$ is the slip angle of the left front wheel 35, $l_f$ is the length between the center of gravity (C.G) of the vehicle and a front axle, and $w_f$ is an overall width. The slip angle may be calculated using a yaw rate calculated based on the difference in wheel speed.

The processor 110 may also compensate for the cornering force by increasing the braking force of the left rear wheel 33.

Accordingly, according to the control apparatus of a four-wheel independent control vehicle and the method thereof in accordance with an aspect of the present disclosure, in a vehicle in which four wheels can be independently controlled, even though a failure occurs in the steering device of any one wheel, traveling performance can be maintained by compensating for an insufficient cornering force by controlling at least one of a steering device, a driving device, and a braking device.

**Claims**

1. A control apparatus of a four-wheel independent control vehicle, comprising:

   a plurality of wheels each installed with a steering device, a driving device, and a braking device; and
   a processor configured to, when a failure occurs in any one steering device of the plurality of wheels, determine a location of a failed wheel, calculate an insufficient cornering force of the failed wheel, and compensate for the insufficient cornering force by controlling at least one of the steering device, the driving device, and the braking device installed on each of the plurality of wheels.

2. The control apparatus of a four-wheel independent control vehicle according to claim 1, wherein the processor compensates for the insufficient cornering force by additionally steering the steering device of a normal wheel.

3. The control apparatus of a four-wheel independent control vehicle according to claim 1, or 2, wherein the processor controls the driving device to increase a driving force of a normal wheel installed in a different direction from a direction of the failed wheel, thereby compensating for the insufficient cornering force.

4. The control apparatus of a four-wheel independent control vehicle according to claim 1, 2, or 3, wherein the processor controls the driving device to reduce a driving force of the failed wheel or to reduce a driving force of a normal wheel located in the same direction as a direction of the failed wheel, thereby compensating for the insufficient cornering force.

5. The control apparatus of a four-wheel independent control vehicle according to any one of claims 1 to 4, wherein the processor controls the braking device to increase a braking force of the failed wheel or to increase a braking force of a normal wheel located in the same direction as a direction of the failed wheel, thereby compensating for the insufficient cornering force.

6. The control apparatus of a four-wheel independent control vehicle according to any one of claims 1 to 5, wherein, when a speed of the vehicle is greater than a threshold value, the processor controls the driving device to reduce a driving force or controls the braking device to increase a braking force, thereby compensating for the insufficient cornering force, and when the speed of the vehicle is less than or equal to the threshold value, the processor controls the steering device to additionally steer a normal wheel or controls the driving device to increase a driving force, thereby compensating for the insufficient cornering force.

7. A control method of a four-wheel independent control vehicle, comprising:

    determining, by a processor, a failure in a steering device, a driving device, and a braking device installed on each of a plurality of wheels;
    determining, by the processor, a location of a failed wheel to calculate an insufficient cornering force of the failed wheel when a failure occurs in any one steering device of the plurality of wheels; and
    compensating for, by the processor, the insufficient cornering force by controlling at least one of the steering device, the driving device, and the braking device installed on each of the plurality of wheels.

8. The control method of a four-wheel independent control vehicle according to claim 7, wherein in the compensating, when a speed of the vehicle is greater than a threshold value, the processor controls the driving device to reduce a driving force or controls the braking device to increase a braking force, and when the speed of the vehicle is less than or equal to the threshold value, the processor controls the steering device to additionally steer a normal wheel or controls the driving device to increase a driving force.

9. The control method of a four-wheel independent control vehicle according to claim 7, or 8, wherein in the compensating, the processor performs at least one operation of an operation of controlling the steering device to additionally steer a normal wheel and an operation of controlling the driving device to increase a driving force of the normal wheel installed in a different direction from a direction of the failed wheel.

10. The control method of a four-wheel independent control vehicle according to claim 7, 8, or 9, wherein in the compensating, the processor performs at least one operation of an operation of controlling the driving device to reduce a driving force of the failed wheel, an operation of controlling the driving device to reduce a driving force of a normal wheel located in the same direction as a direction of the failed wheel, an operation of controlling the braking device to increase a braking force of the failed wheel, and an operation of controlling the braking device to increase a braking force of the normal wheel located in the same direction as the direction of the failed wheel.

## FIG. 1

# FIG. 2

## FIG. 3

EP 4 660 024 A1

# FIG. 4

# FIG. 5

STRAIGHT
TRAVELING (S210)
10

FL STEERING FAILURE
OCCURS (S220)

LACK OF CORNERING
FORCE WHEN
TURNING LEFT (S230)

DETECT FL STEERING
FAILURE (S240)

APPLY FAIL SAFE LOGIC
FOR COMPENSATING
FOR CORNERING FORCE (S250)

## FIG. 6

START

TURNING — S310

DETERMINE WHETHER SYSTEM IS NOT OPERABLE — S320

Y → DETERMINE LOCATION WHERE SYSTEM IS NOT OPERABLE — S340

CALCULATE INSUFFICIENT CORNERING FORCE — S350

VEHICLE SPEED > $V_{thresold}$ — S360

N → PERFORM VEHICLE CORNERING MOTION — S330

Y → FL DRIVING FORCE DECREASE
RL DRIVING FORCE DECREASE
FL BRACKING FORCE INCREASE
RL BRACKING FORCE INCREASE — S370

N → FR STEERING Toe-in or
RL STEERING Toe-in or
RR STEERING Toe-out or
FR DRIVING FORCE INCREASE or
RR DRIVING FORCE INCREASE — S380

PERFORM CORNERING MOTION USING CORRECTED CORNERING FORCE — S390

END

# FIG. 7

DRIVER'S INTENDED STEERING

INABILITY TO STEERING DUE TO FAIL

$F_x^{fl}$

$F_y^{fl}$

31

35

$F_x^{fr}$

$F_y^{fr}$

32

$F_x^{rl}$

$F_y^{rl}$

33

$F_x^{rr}$

$F_y^{rr}$

34

11

# FIG. 8A

# FIG. 8B

FIG. 8C

## EUROPEAN SEARCH REPORT

**Application Number**

EP 24 21 0496

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2024 0016627 A (HYUNDAI MOBIS CO LTD [KR]) 6 February 2024 (2024-02-06) | 1,7 | INV. B60T7/12 |
| Y | * Fig. 1-4; par. [0001], [0028], [0037], [0098] * | 2,9 | B60T8/1755 B60T8/32 B60W30/02 |
| Y | US 2015/120145 A1 (HAN DONG SEOG [KR] ET AL) 30 April 2015 (2015-04-30) * Fig. 1-15; par. 3, cl. 8 * | 2,9 | B60W50/029 B62D6/00 B62D7/15 B62D9/00 |
| A | JP 2014 000832 A (NTN TOYO BEARING CO LTD) 9 January 2014 (2014-01-09) * Fig. 1-5; par. [0001], [0009], [0010], [0019], [0037], [0040], [0041] * | 1,7 | |
| A | US 7 315 777 B2 (TOYOTA CHUO KENKYUSHO KK [JP]) 1 January 2008 (2008-01-01) * Fig. 1-2; col. 1, l. 14 - col. 2, l. 3 * | 1-10 | |
| A | WO 2018/235343 A1 (MITSUBISHI ELECTRIC CORP [JP]) 27 December 2018 (2018-12-27) * the whole document * | 1-10 | **TECHNICAL FIELDS SEARCHED (IPC)** |
| A | JP 2012 121391 A (NTN TOYO BEARING CO LTD) 28 June 2012 (2012-06-28) * Fig. 1-8; par. [0036], [0037] * | 1-10 | B60T B60W B62D |

The present search report has been drawn up for all claims

| Place of search | Date of completion of the search | Examiner |
|---|---|---|
| Munich | 31 March 2025 | Kirov, Youlian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 660 024 A1

### ANNEX TO THE EUROPEAN SEARCH REPORT
### ON EUROPEAN PATENT APPLICATION NO.

EP 24 21 0496

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | | Publication date | Patent family member(s) | | Publication date |
|---|---|---|---|---|---|
| KR 20240016627 | A | 06-02-2024 | NONE | | |
| US 2015120145 | A1 | 30-04-2015 | KR | 101480252 B1 | 12-01-2015 |
| | | | US | 2015120145 A1 | 30-04-2015 |
| JP 2014000832 | A | 09-01-2014 | JP | 6038494 B2 | 07-12-2016 |
| | | | JP | 2014000832 A | 09-01-2014 |
| US 7315777 | B2 | 01-01-2008 | JP | 4165380 B2 | 15-10-2008 |
| | | | JP | 2004249971 A | 09-09-2004 |
| | | | US | 2004186647 A1 | 23-09-2004 |
| WO 2018235343 | A1 | 27-12-2018 | CN | 110753653 A | 04-02-2020 |
| | | | EP | 3643583 A1 | 29-04-2020 |
| | | | JP | 6516792 B2 | 22-05-2019 |
| | | | JP | 2019006188 A | 17-01-2019 |
| | | | US | 2020102007 A1 | 02-04-2020 |
| | | | WO | 2018235343 A1 | 27-12-2018 |
| JP 2012121391 | A | 28-06-2012 | NONE | | |

**REFERENCES CITED IN THE DESCRIPTION**

**Patent documents cited in the description**

- KR 1020240074363

- KR 1020090062321